# EUROPEAN PATENT SPECIFICATION

(11) **EP 4 517 150 B1**
(45) Date of publication and mention of the grant of the patent: **07.10.2026**
(21) Application number: 24020272.1
(22) Date of filing: 21.08.2024
(51) Int. Cl.: F16P 3/08, H01H 27/00

(54) **HANDLE SAFETY ASSEMBLY FOR INDUSTRIAL MACHINES OR PLANTS**
GRIFFSICHERHEITSANORDNUNG FÜR INDUSTRIEMASCHINEN ODER -ANLAGEN
ENSEMBLE DE SÉCURITÉ DE POIGNÉE POUR MACHINES OU INSTALLATIONS INDUSTRIELLES

(30) Priority: 30.08.2023 IT 202300017820
(43) Date of publication of application: 05.03.2025
(73) Proprietor: Pizzato Elettrica S.r.l., 36063 Marostica (Vicenza) (IT)
(72) Inventor: Pizzato, Marco, 36063 Marostica (VI) (IT); Zonta, Simone, 36061 Bassano del Grappa (VI) (IT)
(74) Representative: Studio Torta S.p.A.

(56) References cited:
- EP-A2- 1 826 472
- DE-A1- 102008 060 004
- DE-B4- 102008 032 246
- JP-A- 2006 140 040
- KR-B1- 101 961 130

## Description

### Technical Field

The present invention finds application in the field of electrical devices for industrial use, in particular for the control of industrial machines and plants, and in particular relates with a handle safety assembly which may be, for example, designed for the protection of access to safety perimeters or to hazardous areas of industrial machines or plants.

### State of the art

Several types of safety assemblies which comprises handles are known for the protection of accesses to industrial machines or plants, such as panels, perimeters or safety barriers.

Generally, these assemblies are composed of a safety switch suitable for being anchored to a fixed part of the frame of the access to be protected and an actuator device fixed, in turn, to the moving part of the access and in such a position as to interact with the switch when the access is opened or closed and wherein the actuator device comprises a portion shaped like a handle to facilitate the movement of the access.

Always in a known manner, the safety switch comprises switching means connected to the power and/or service circuits of the machine or plant, or parts thereof, and which are designed to receive one or more commands for the switching of the above circuits upon the interaction between the safety switch and the actuator device.

In turn, the actuator device, which represents the component that also operates as a handle for moving the access, comprises an anchoring bracket fixed to the frame of the movable part of the access and a handle fixed, in turn, to the bracket.

Solutions are known on the market, for example described in DE102008032246 B4, EP1826472 or KR10-1585038 B1, which comprise an anchoring bracket to anchor the safety switch to the fixed part of the access and a sliding actuator device having a slide to which both an actuator that interacts with the safety switch and a centering pin that fits into a seat made on the anchoring bracket, above the safety switch, are fixed.

In particular, EP1826472 discloses a safety switch that comprises a switch anchored to the fixed part of the access frame by means of a flat bracket and an actuator device that comprises a slide suitable for mounting on a respective anchoring bracket integral with the movable part of the access.

The slide is mounted in a sliding manner along this anchoring bracket along an actuation direction parallel to the anchoring plane. Furthermore, the slide has an actuator that is mounted in a misaligned position with respect to the actuation direction so that the slide assumes an asymmetrical configuration with respect to a horizontal plane passing through the actuation direction.

It follows that a drawback of these known solutions is that, in order to reverse the actuation direction of the actuator device, for example to switch from right-to-left actuation to left-to-right actuation, the actuator must necessarily be removed from the slide.

Therefore, the known solutions require that the actuator is necessarily removable from the slide and, therefore, potentially subject to break-in.

On the contrary, if the actuator device is fixedly anchored, for example by means of rivets, one-way screws or other non-removable fixing means, it would be necessary to provide different devices depending on the opening direction of the access.

A further example of a handle safety assembly particularly suitable for sliding opening accesses is described in EP2264353, in the name of the same Applicant of the present application.

This assembly comprises a handle having an anchoring bracket fixed to the movable part of the access and that defines a guide for the sliding of a handle integral with a key actuator, generally defined by a plate-like element appropriately shaped to fit into a corresponding slot provided in the safety switch associated with the fixed part of the access, so as to be adapted to interact with a locking/unlocking mechanism present in the same switch.

In turn, the safety switch is fixed to the fixed part of the access by means of a respective L-shaped anchoring bracket which comprises a first anchoring portion for anchoring to the fixed part of the access and a second anchoring portion, angled at 90° with respect to the first portion and extending therefrom, to which the safety switch is fixed. A limit of this known solution is that to reverse the direction of use of the handle, for example to switch from an opening from right to left to an opening from left to right, it is necessary to reverse the bracket by 180° with respect to a horizontal axis.

This operation complicates and makes the installation operations of the anchoring bracket, and consequently of the entire safety assembly, laborious.

Therefore, there is a need for a handle safety assembly which has even greater flexibility in its positioning, being suitable to be even more quickly adapted to the particular opening mode of the access.

### Scope of the invention

The object of the present invention is to overcome the above drawbacks by providing a handle safety assembly for the protection of access to industrial machines or plants having properties of high efficiency and relative cost-effectiveness.

A particular object is to provide a handle safety assembly for the protection of access to industrial machines or plants suitable to be adapted in a simple and easy manner to the different types of opening of an access with sliding opening, minimizing the number of operations to be carried out to obtain the correct orientation of the several components of the assembly.

A further object is to realize a handle safety assembly for the protection of access to industrial machines or plants that is particularly safe and, in particular, prevents any possibility of removal of the actuator that could represent a risk of break-in.

These objects, as well as others that will become more apparent hereinafter, are achieved by a handle safety assembly for the protection of an access to industrial machines or plants which, according to claim 1, comprises a safety switch provided with switching means suitable to be connected to power and/or service circuits of the industrial machine or plant, an actuator device comprising a slide suitable for being mounted on the access in a sliding manner along an actuation direction and having actuator means suitable for interacting with said safety switch following the approach/distance movement of said slide with respect to said safety switch along said actuation direction, an anchoring bracket for mounting said safety switch to the fixed part of the access and provided with fixing means for said safety switch.

The anchoring bracket is provided with a front face lying on a frontal plane parallel to said actuation direction and on which said fixing means are made.

Furthermore, the slide is symmetrical with respect to a first symmetry plane containing said actuation direction and orthogonal to said frontal plane.

In this way, the configuration for opening rightward will differ from that for opening leftward only for the fact that the actuator device must be fixed on the access tilted by 180° in the respective symmetry plane and possibly for the fact that the head of the safety switch must also be rotated by 180° with respect to a vertical axis to allow interaction between the actuator device and the switching means.

On the contrary, it will not be necessary to modify the orientation of the anchoring bracket of the safety switch, nor to remove the actuator means to reinsert them according to the appropriate orientation from time to time.

Preferably, the assembly may comprise a guide adapted to be anchored to the movable part of the access to define said actuation direction and having a symmetrical configuration with respect to the first symmetry plane, said slide being slidably mounted along said guide.

In this way, the guide may be mounted on the movable part of the access according to either of the two orientations, regardless of whether the access opening is rightward or leftward.

Advantageous embodiments of the invention are obtained in accordance with the dependent claims.

### Brief disclosure of the drawings

Further features and advantages of the invention will become more apparent in the light of the detailed description of a preferred but non-exclusive embodiment of the assembly according to the invention, shown by way of non-limiting example with the aid of the attached drawing tables, wherein:
**FIG. 1** is a perspective view of the assembly in the closed access condition and with actuator means not inserted;
**FIG. 2** is a perspective view of the assembly in the closed access condition and with actuator means inserted;
**FIG. 3** is a front view of the assembly in the condition of Fig. 1 and without the safety switch;
**FIG. 4** is a sectional view of the assembly of Fig. 3 according to the trace plane A-A;
**FIG. 5** **is** a front view of the assembly in the condition of Fig. 2 and without the safety switch;
**FIG. 6** is a sectional view of the assembly of Fig. 5 according to the trace plane B-B in a first operating condition;
**FIG. 7** is a perspective view of the anchoring bracket;
**FIG. 8** is a front view of the anchoring bracket;
**FIG. 9** is a side view of the anchoring bracket;
**FIG. 10** is a perspective view of the guide;
**FIG. 11** is a front view of the guide;
**FIG. 12** is a perspective view of the slide;
**FIG. 13** is a front view of the slide.

### Best mode of carrying out the invention

The attached figures show a particular embodiment, to be considered as a non-limiting example, of a handle safety assembly, generally referred as 1, which is suitable to be mounted at an access of a working area of a machine or industrial plant protected by a barrier or other protection, wherein the assembly has the function of protecting such access to limit or guarantee safe access to the working area.

In a known manner, the access, not shown, will comprise a fixed part suitable for delimiting the working area and at least one movable part acting as a guard for entry into the working area and in proximity of which the safety assembly **1** will be mounted. The handle safety assembly **1** comprises a safety switch **2** provided with a case **3** housing switching means, not shown, suitable to be connected to power and/or service circuits of the machine or industrial plant, and an actuator device **4** suitable for being mounted on the access in a sliding manner along a predetermined actuation direction **X,** generally horizontal in use, and having actuator means **5** suitable for interacting with the safety switch **2** upon the approach/removal movement of the actuator device **4** with respect to the safety switch **2** along the actuation direction **X.**

In the embodiment of **Figs.** from **1** to **5,** the handle safety assembly **1** is arranged according to the orientation suitable for fixing to an access with rightward sliding opening.

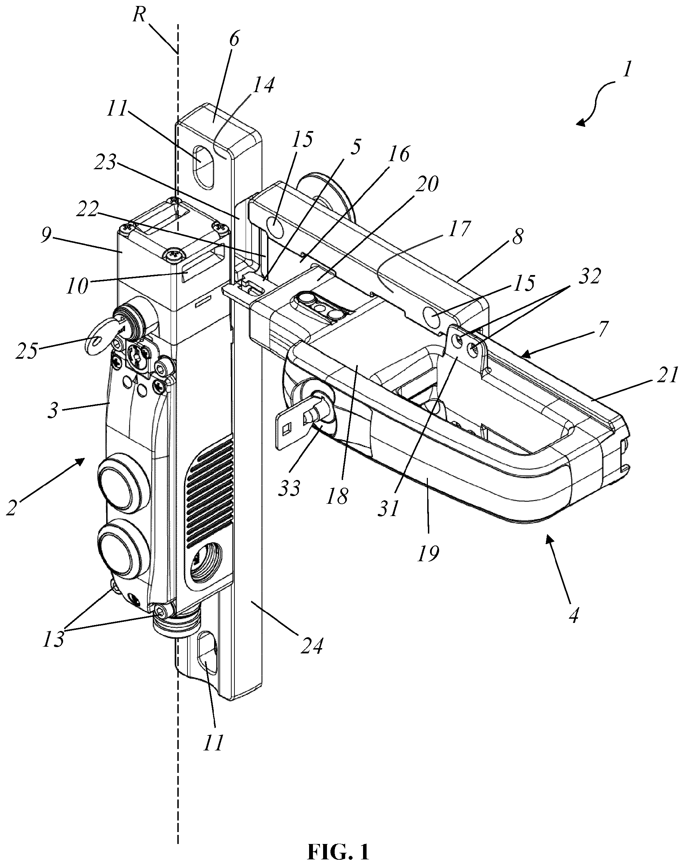

In particular, in **Fig. 1** the safety assembly **1** is shown in the operating condition corresponding to that of closed but not locked access, wherein the actuator means **5** do not interact with the safety switch **2.**

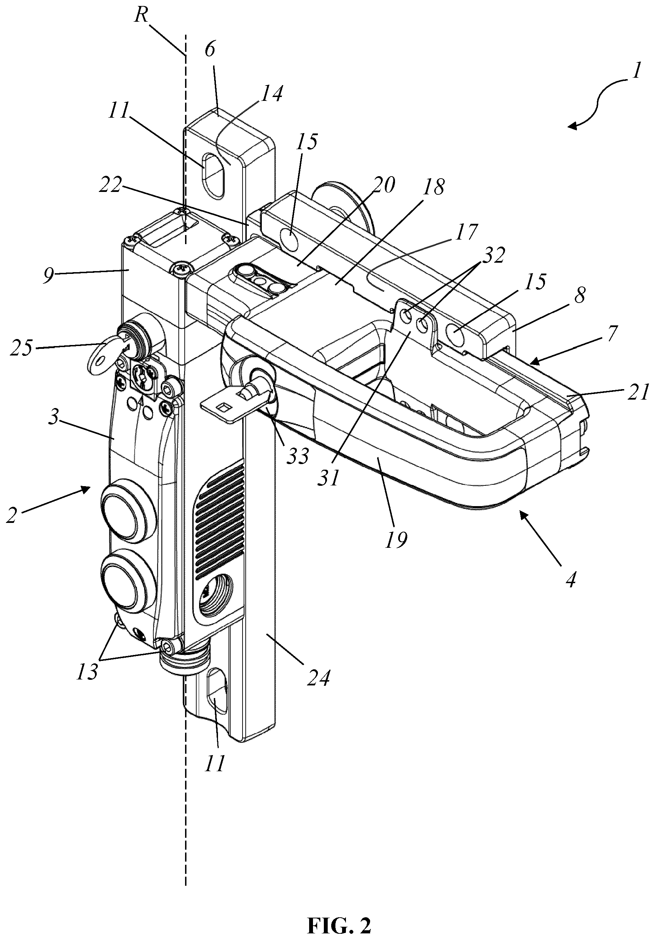

In turn, in **Fig. 2** the handle safety assembly **1** is shown in the operating condition corresponding to that of closed access and wherein the actuator means **5** interact with the safety switch **2.**

The condition of **Fig. 2** may correspond to that in which the access is closed and not blocked, i.e. with the actuator means **5** inserted inside the safety switch **2** but not blocked, or to that in which the access is closed and blocked, i.e. with the actuator means **5** inserted inside the safety switch **2** and blocked.

The fixing of the safety switch **2** to the fixed part of the access is obtained by means of an anchoring bracket **6** suitable for being fixed to the fixed part of the access. Furthermore, the case **3** is, in turn, anchored to the anchoring bracket **6.**

The actuator device **4** comprises a slide **7** slidingly mounted on the movable part of the access to move parallel to the actuation direction **X** in both senses with an approaching or departing movement with respect to the case **3.**

The slide **7** will support the actuator means **5** to allow the simultaneous approaching or departing movement with respect to the safety switch **2,** so as to allow their interaction or disengagement depending on the operational needs, as described in more detail below.

Preferably, the actuator means **5** are fixed in a not removable manner to the slide **7.** For example, the actuator means **5** are riveted to the slide **7** or are fixed by any other known not removable means.

This type of fixing increases the safety of the handle safety assembly **1** and reduces the risk of break-in. Furthermore, this feature is allowed by the symmetrical shape of the actuator device **4.**

Preferably, the handle safety assembly **1** also comprises a guide **8** allowing the slidably fixing of the slide **7** on the movable part of the access and that defines the actuation direction **X.**

Opportunely, the slide **7** has a symmetrical configuration with respect to a first symmetry plane **S1,** horizontal in use, and containing the actuation direction **X.**

With regard the configuration of the safety switch **2,** both in its structure and in its internal configuration and in that of the switching means, and to the configuration of the actuator means **5,** the person skilled in the art will understand that those illustrated in the figures are to be understood exclusively as one of the many possible but that they can be replaced equivalently by different configurations, without thereby departing from the scope of protection of the present invention.

In particular, the safety switch **2** has a case **3** which is also associated with a head **9** which is fixedly or orientably anchored to the case **3** and which comprises a slot **10** for the insertion of the actuator means **5.**

Alternatively, the safety switch **2** may be without the head **9** and the slot **10** may be made on the case **3.**

The safety switch **2** also comprises a locking/unlocking mechanism (not shown) designed to selectively lock the actuator means **5** with respect to to the safety switch **2.**

According to a first variant, the head **9** may have a pair of slots **10** arranged on opposite sides with respect to a vertical plane, centred with respect to the case **3,** and orthogonal to a first symmetry plane **S1** to allow the entry of the actuator means **5** from both sides, depending on the assembly.

The head **9** may be fixed or orientable with respect to the case **3,** for example rotatable by at least 180° with respect to a rotation axis **R** orthogonal to the first symmetry plane **S1** and substantially central with respect to the case **3.**

According to another variant, there will be only one slot **10** and in this case the head **9** will rotate with respect to the case **3** around the above rotation axis **R** so as to allow the slot **10** to be oriented always in a position facing the actuator means **5.**

More precisely, the embodiment of the figures shows a safety switch **2** of the mechanically operated type suitable for interacting with an actuator device **4** provided with actuator means **5** having a symmetrical configuration with respect to the first symmetry plane **S1.**

According to claim 1, the actuator means **5** develop on a lying plane parallel to or coinciding with the first symmetry plane **S1** and comprise an actuator that will have a symmetrical structure with respect to such first symmetry plane **S1.**

According to the embodiment of the figures, the actuator means **5** comprise, or are defined by, a key actuator that extends from the slide **7** in a lying plane parallel to or coinciding with the first symmetry plane **S1** and is symmetrical with respect to such first symmetry plane **S1.**

The key actuator, also identified for simplicity with **5,** is designed to fit inside the slot **10** which, in use, is in a position such as to be aligned with the key actuator **5** with respect to the lying plane.

In this way, the insertion of the key actuator **5** into the head **9** is allowed upon the sliding of the slide **7** along the guide **8,** approaching the safety switch **2,** and its interaction with the switching means.

According to an alternative embodiment, not shown, the handle safety assembly **1** may be of the electronically operated type, i.e. having a safety switch **2** and an actuator device **4** provided with respective remote communication elements suitable to allow an interaction between the switching circuit and the actuator means **5** by exchanging a proximity signal, for example of the RFID (*Radio Frequency Identification*) type, NFC (*Near Field Communication*) type or other electronic or magnetic signal, to allow the safety switch **2** to discriminate the presence of the actuator means **5** even in a unique way, when these are at a distance such that the access can be considered closed.

In this case, the slide **7** may be free of any protruding element to allow the access to be blocked or, preferably, it may be provided with a centering and retaining pin that will be inserted into a special slot or centering hole provided in the head **9** and that preferably will always have a symmetrical configuration with respect to at least the first symmetry plane **S1.**

The fixing of the safety switch **2** to the fixed part of the access will instead be obtained by means of an anchoring bracket **6** suitable for being fixed to the fixed part of the access and on which the case **3** will, in turn, be anchored.

Advantageously, the anchoring bracket **6** that allows the fixing of the safety switch **2** to the fixed part of the access may also be symmetrical, in particular with respect to a second symmetry plane **S2** orthogonal, in use, both to the first symmetry plane **S1** and to the actuation direction **X** of the actuator device **4.**

As visible more clearly from **Figs.** from **7** to **9,** the anchoring bracket **6** has a substantially quadrangular plan shape with a transverse dimension **w** which will preferably be equal to the transverse dimension of the safety switch **2** for which it is designed.

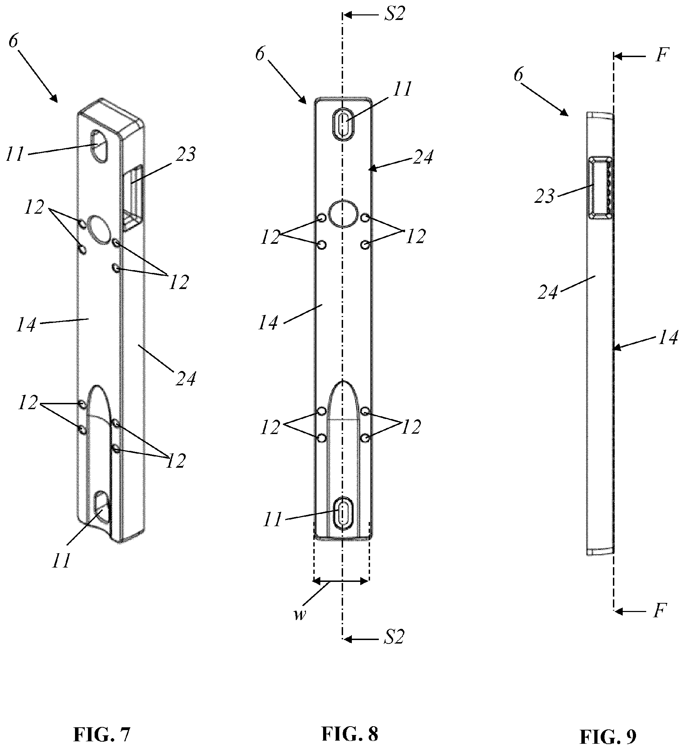

In particular, the anchoring bracket **6** has a front face **14** lying on a frontal plane **F (****Fig. 9****)** parallel to the actuation direction **X** and orthogonal to the first symmetry plane **S1.**

Fixing means **11, 12** are arranged on the front face **14** and which are suitable for allowing both the fixing of the same anchoring bracket **6** to the fixed part and the fixing of the safety switch **2** to the anchoring bracket **6.**

In a preferred and particularly advantageous manner, the above fixing means will be made directly on the front face **14** of the anchoring bracket **6,** preferably in such a way as not to protrude with respect thereto.

For example, as always visible in the figures, the fixing means comprise first fixing members **11** suitable for allowing the assembly of the anchoring bracket **6** on the fixed part of the access and anchoring members **12** for mounting the case **3** on the anchoring bracket **6.** Preferably, the case **3** is fixed on the front face **14** of the anchoring bracket **6.**

In the embodiment of the figures, both the first fixing members **11** and the anchoring members **12** are made directly in the front face **14** of the anchoring bracket **6** and consist of through holes or slots suitable for allowing the fixing of the anchoring bracket **6** to the fixed part of the access and the anchoring of the case **3** to the anchoring bracket **6** by means of screws **13** or equivalent means, which however may be replaced by fixing elements of a different type.

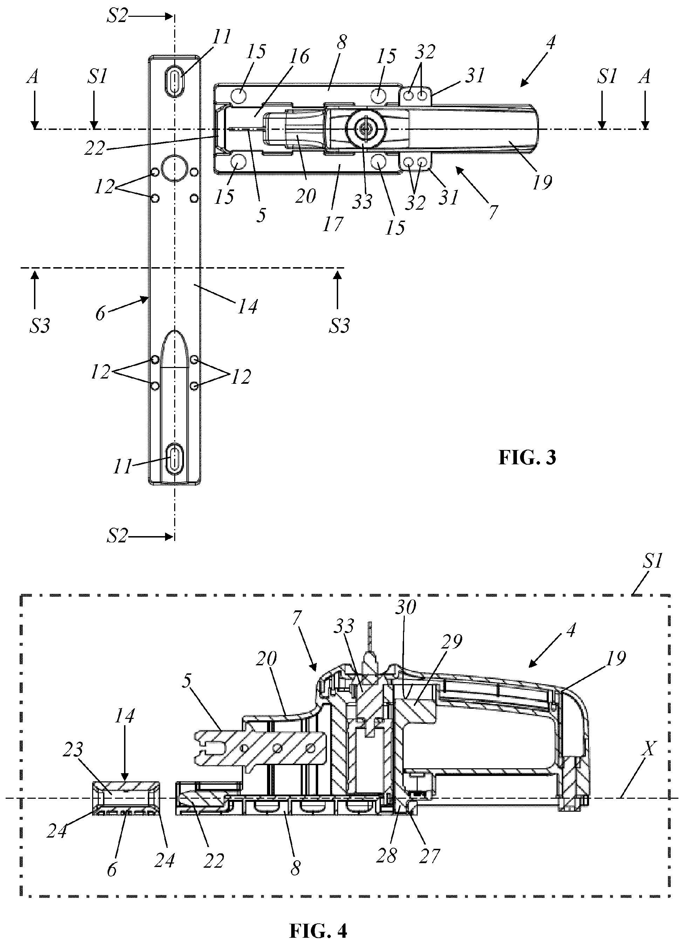

Furthermore, in a particularly advantageous manner, the first fixing members **11** and possibly also the anchoring members **12** are distributed on the front face **14** of the anchoring bracket **6** according to a symmetrical configuration with respect to the second symmetry plane **S2** and possibly also with respect to a third symmetry plane **S3 (****Fig. 3****)** parallel to the first symmetry plane **S1.**

The anchoring members **12** will also be distributed according to the same configuration with which corresponding passages provided in the case **3** are distributed and suitable for allowing the insertion of the screws **13** or other equivalent means.

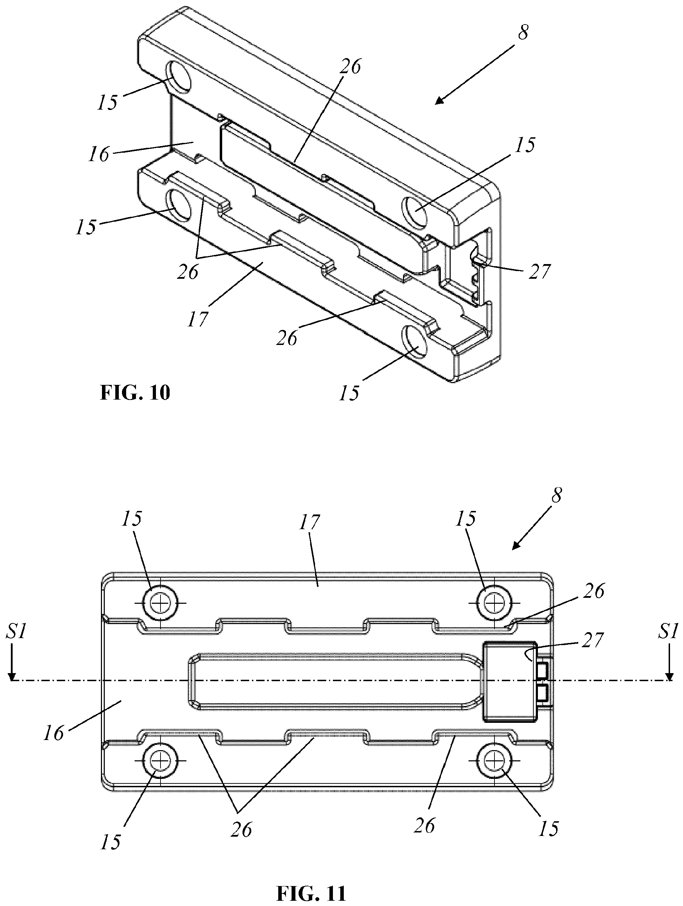

**Figs. 10** and **11** show a preferred embodiment of the guide **8** which the slide **7** will be slidably mounted on.

Preferably, the guide **8** also has a symmetrical configuration with respect to the first symmetry plane **S1** and is provided with second fixing members **15** suitable for allowing its mounting on the movable part of the access.

The slide **7** will instead remain blocked inside the central groove **16** of the guide **8** with the sole possibility of sliding along the actuation direction **X.**

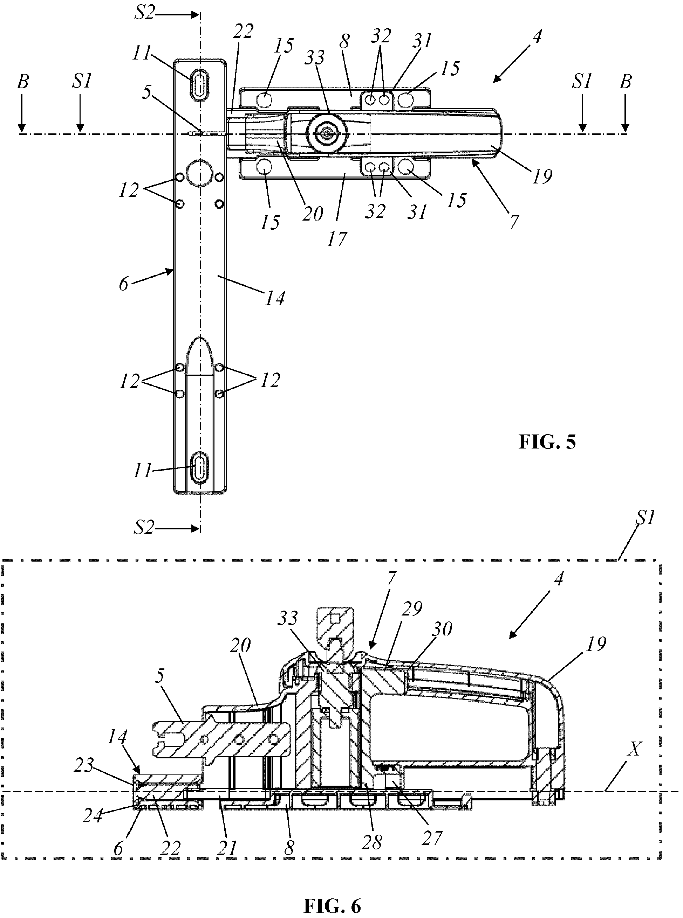

To this end, the central groove **16** will be provided with longitudinal fins **26** which will represent a constraint for the slide **7** in the frontal direction, retaining it inside the central groove **16.** Furthermore, at the end of the central groove **16,** at the extraction port of the actuator means **5,** there is an end stroke seat **27** for a slider **28** placed inside the slide **7,** as more clearly visible from **Figs. 4** and **6****.**

From the comparison of these figures, it can be observed that the slide **7** will translate along the guide **8** between a first end position wherein the actuator means **5** do not interact with the safety switch **2** and a second end position wherein the actuator means **5** interact with the safety switch **2.**

Moreover, when the slide **7** is translated with maximum stroke in the direction of extraction of the actuator means **5,** moving into the first end position, the slider **28** will be inserted into the end stroke seat **27** due to the push of a spring or other elastic element, not visible, preventing the slide **7** from continuing further in its stroke and keeping it stably in position.

Advantageously, this prevents the slide **7** from undergoing unwanted movements as a result of impacts or vibrations.

The slider **28** will act as a locking element and will be suitably integral with an unlocking member **29,** which may be manually operated such as a key, button or similar, through the activation of which by an operator it will be possible to extract the slider **28** from the end stroke seat **27** to unlock the slide **7** and allow it to slide in the opposite sense, i.e. towards the second end position.

Advantageously, the slide **7** will be provided with a housing seat **30** for the unlocking member **29** shaped to completely contain such unlocking member **29** when the slide **7** is in the first end position, so that the unlocking member **29** does not have any part protruding outside the housing seat **30** and which could be accidentally touched causing an unauthorized movement of the slider **28.**

Practically, the second fixing members **15** will also be distributed on the front face **17** of the guide **8** according to a symmetrical configuration with respect to the first symmetry plane **S1.**

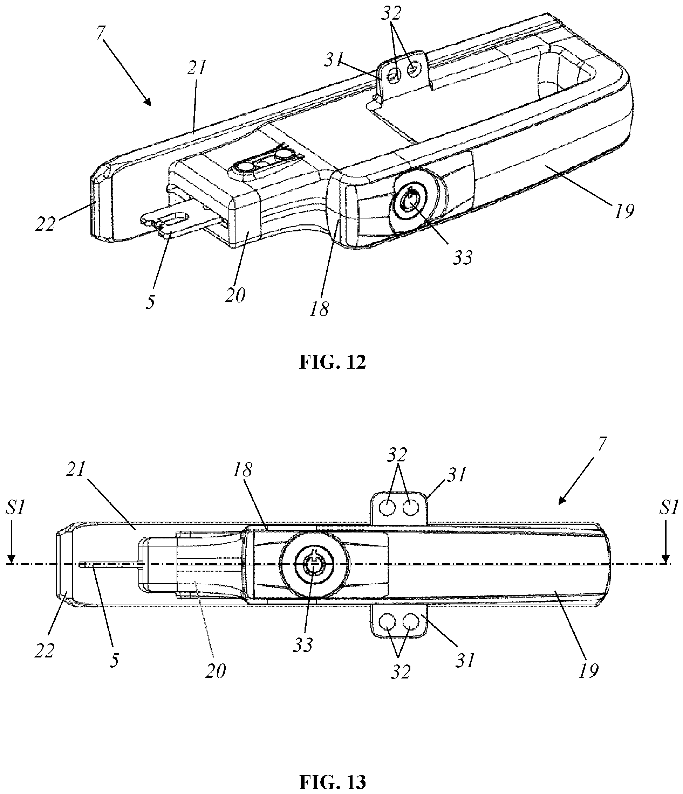

**Figs. 12** and **13** illustrate a preferred but not exclusive embodiment of the slide **7** which comprises a rigid shell **18** having a grip portion **19** shaped like a handle, suitable to be grasped by a user to promote the sliding of the slide 7 along the guide **8,** and an actuation portion **20** integral with the grip portion **19** and from which the key actuator **5** protrude or which will in any case be provided with the actuator means.

Advantageously, the rigid shell **18** also has a symmetrical configuration with respect to the first symmetry plane **S1,** so that it will be sufficient to tilt it 180° in the first symmetry plane **S1** to move it from the configuration for leftward opening of the access to the configuration for rightward opening of the access, or vice versa.

Advantageously, the entire actuator device **4** will have a symmetrical configuration with respect to the first symmetry plane **S1,** so that it will be sufficient to tilt it 180° in the first symmetry plane **S1** to move it from the configuration for leftward opening of the access to the configuration for rightward opening of the access, or vice versa.

The slide **7** will also be provided with a centering bracket **21,** which in the configuration of the figures will be arranged behind the actuator means **5** but which may also be positioned differently, for example above or below, and which slides into the central groove **16** of the guide **8** to keep the rigid shall 18 constrained to the guide **8.**

The centering bracket **21** comprises a centering end **22** shaped to fit into a seat **23** made on the side face **24** of the anchoring bracket **6,** ensuring further stability for the coupling between the safety switch **2** and the actuator device **4** in the closed condition of the access.

Appropriately, the anchoring bracket **6** will be provided with seats **23** on both side faces **24** or with a single seat **23** that extends along its whole transverse development to allow the centering end **22** of the centering bracket **21** to be inserted either when the guide **8** is mounted on the right or on the left of the anchoring bracket **6.**

Preferably, the anchoring bracket **6** is made in a single body that comprises the first fixing members **11,** the anchoring members **12** and the at least one seat **23.**

Preferably, the anchoring bracket **6** has a constant thickness and the seat **23** is obtained on the side face **24** of the anchoring bracket **6** without modifying the thickness of the anchoring bracket **6.** In this way the front face **14** is substantially planar and free of protruding elements. Furthermore, this allows the positioning of the seat **23** below the portion of the front face **14** on which the head **9** of the safety switch **2** rests and/or on which the slot **10** is made.

Optionally, the actuator device **4** also comprises locking means designed to selectively lock the sliding of the slide **7** along the guide **8** towards the safety switch **2** when the slide **7** is in the first end position in which the actuator means **5** do not interact with the safety switch **2.**

The locking means comprise a fin **31** integral with the rigid shell **18** and positioned so as to protrude laterally with respect to the guide **8** when the slide **7** is in the first end position.

One or more through holes **32** are made on the fin **31** and are suitable for allowing the insertion of a padlock therein. In this way, when the slide **7** is in the extracted position, an operator may apply a padlock to a through hole **32** of the fin **31** to prevent, thanks to the interference with the guide **8,** the sliding of the slide **7** towards the safety switch **2** and therefore the activation of the switching means by the actuator means **5.**

Advantageously, this prevents the restarting of the machine until the operator removes the padlock from the locking means.

Alternatively, or in addition, the locking means may comprise a mechanical selector **33,** for example a key-type selector, integrated into the rigid shell **18** and associated with the end stroke seat **27.** The mechanical selector **33** is accessible by an operator and is designed to undergo into a free position wherein it does not interact with the end stroke seat **27** and into a locked position wherein it interacts with the end stroke seat **27** and locks the sliding of the slide **7** along the guide **8** by mechanical interference.

From an operational point of view, upon the closing of the access, the slide **7** will be slid along the guide **8** to insert the actuator means **5** into the slot **10** and allow their interaction with the switching means, either directly or through interaction with an electrically or electronically controlled locking/unlocking mechanism, which will lock the actuator means **5** inside the head **9** to prevent the opening of the access in an unsafe condition.

Following the release of the actuator means **5,** which can be managed remotely by sending appropriate controls to the locking/unlocking mechanism or even locally by acting on appropriate safety devices present on the safety switch **2,** such as for example a key selector **25,** it will be possible to make the slide **7** run along the actuation direction **X** in the direction of removal and extraction of the actuator means **5.**

It is understood that the operating modality of the handle safety assembly **1** may vary depending on the needs according to multiple methods known to the person skilled in the art.

## Claims

1. A handle safety assembly for protection of an access to industrial machines or plants, wherein an access has at least one fixed part suitable for delimiting a working area of the machine or industrial plant and at least one movable part acting as a protection for entry into said working area, which assembly comprises:
- a safety switch **(2)** provided with switching means suitable to be connected to power and/or service circuits of the machine or industrial plant;
- an actuator device **(4)** comprising a slide **(7)** suitable for being mounted on the access in a slidable manner along an actuation direction **(X)** and having actuator means **(5)** suitable for interacting with said safety switch **(2)** upon the approaching/departing movement of said slide **(7)** with respect to said safety switch **(2)** along said actuation direction **(X);**
- an anchoring bracket **(6)** for mounting said safety switch (2) to the fixed part of the access and provided with fixing means **(11, 12)** for said safety switch **(2);** wherein said anchoring bracket **(6)** is provided with a front face **(14)** lying on a frontal plane **(F)** parallel to said actuation direction **(X)** and on which said fixing means **(11, 12)** are made,
wherein said slide **(7)** is symmetrical with respect to a first symmetry plane **(S1)** containing said actuation direction **(X)** and orthogonal to said frontal plane **(F),** and **characterized**
**in that** said actuator means **(5)** develop on a lying plane coincident with said first symmetry plane **(S1)** and comprise an actuator having a symmetrical structure with respect to said first symmetry plane **(S1).**

2. Handle safety assembly as claimed in claim 1, **characterized in that** said actuator device **(4)** is symmetrical with respect to said first symmetry plane **(S1).**

3. Handle safety assembly as claimed in claim 1 or 2, **characterized in that** said actuator means **(5)** are fixed in a not removable manner to said slide **(7).**

4. Handle safety assembly as claimed in any claim from 1 to 3, **characterized in that** said fixing means **(11, 12)** comprise a plurality of first fixing members **(11)** arranged on said front face **(14)** of said anchoring bracket **(6)** with a symmetrical configuration with respect to a second symmetry plane **(S2)** orthogonal, in use, to said actuation direction **(X)** of said actuator device **(4)** for fixing said anchoring bracket **(6)** to the fixed part of the access.

5. Handle safety assembly as claimed in any preceding claim, **characterized in that** said fixing means **(11, 12)** comprise a plurality of anchoring members **(12)** arranged on said front face **(14)** of said anchoring bracket **(6)** with a symmetrical configuration with respect to a second symmetry plane **(S2)** orthogonal, in use, to said actuation direction **(X)** of said actuator device **(4)** for fixing said safety switch **(2)** to said anchoring bracket **(6).**

6. Handle safety assembly as claimed in any preceding claim, **characterized in that** said actuator means **(5)** have a symmetrical configuration with respect to said first symmetry plane **(S1).**

7. Handle safety assembly as claimed in any preceding claim, **characterized in that** said actuator device **(4)** has a symmetrical configuration with respect to said first symmetry plane **(S1).**

8. Handle safety assembly as claimed in claim 6 or 7, **characterized in that** said actuator means **(5)** comprise an actuator that extends from said slide **(7)** in a lying plane parallel to or coinciding with said first symmetry plane **(S1)** and is symmetrical with respect to said first symmetry plane **(S1).**

9. Handle safety assembly as claimed in any preceding claim, **characterized by** comprising a guide **(8)** suitable for being anchored to the movable part of the access and defining said actuation direction **(X),** said slide **(7)** being mounted so as to slide on said guide **(8)** along said actuation direction **(X).**

10. Handle safety assembly as claimed in claim 9, **characterized in that** said guide **(8)** has a symmetrical configuration with respect to said first symmetry plane **(S1).**

11. Handle safety assembly as claimed in claim 10, **characterized in that** said slide **(7)** comprises a rigid shell **(18)** having a handle portion **(19)** shaped like a handle to be gripped by a user and promote the sliding of said slide **(7)** along said guide **(8)** and an actuation portion **(20)** integral with said handle portion **(19)** and provided with said actuator means **(5).**

12. Handle safety assembly as claimed in claim 10 or 11, **characterized in that** said slide **(7)** slides along said guide **(8)** between a first end position wherein said actuator means **(5)** do not interact with said safety switch **(2)** and a second end position wherein said actuator means **(5)** interact with said safety switch **(2)** and houses inside it a slider **(28)** or locking member suitable for entering, when said slide **(7)** is in said first end position, into an end stroke seat **(27)** made in said guide **(8).**

13. Handle safety assembly as claimed in claim 12, **characterized in that** said slider **(28)** or locking member is associated with an unlocking member **(29)** suitable for allowing the extraction of said slider **(28)** from said end stroke seat **(27)** to unlock said slide **(7)** and allow it to slide towards said second end position.

14. Handle safety assembly as claimed in claim 13, **characterized in that** said slide **(7)** comprises a housing seat **(30)** for said unlocking member **(29),** said housing seat **(30)** being shaped to completely contain said unlocking member **(29)** when said slide **(7)** is in said first end position.

15. Handle safety assembly as claimed in any preceding claim, **characterized in that** said slide **(7)** is provided with a centering bracket **(21)** arranged behind said actuator means **(5)** and having a centering end **(22)** and **in that** said anchoring bracket **(6)** comprises a side face **(24)** on which a seat **(23)** is made for the insertion of said centering end **(22),** said anchoring bracket **(6)** being of substantially constant thickness and free of protruding elements.

## Patentansprüche

1. Griffsicherheitsanordnung zum Schutz eines Zugangs zu Industriemaschinen oder -anlagen, wobei ein Zugang mindestens ein feststehendes Teil, das zum Abgrenzen eines Arbeitsbereichs der Maschine oder Industrieanlage geeignet ist, und mindestens ein bewegbares Teil, das als Schutz vor dem Betreten des genannten Arbeitsbereichs dient, aufweist, wobei die Anordnung Folgendes umfasst:
- einen Sicherheitsschalter **(2),** der mit Schaltmitteln versehen ist, die geeignet sind, um an die Leistungs- und/oder Hilfsstromkreise der Maschine oder Industrieanlage angeschlossen zu werden;
- eine Aktorvorrichtung **(4),** umfassend einen Schlitten **(7),** der geeignet ist, um in einer verschiebbaren Weise entlang einer Betätigungsrichtung **(X)** an dem Zugang montiert zu werden, und aufweisend Aktormittel **(5),** die bei der Annäherungs-/Wegbewegung des Schlittens **(7)** in Bezug auf den Sicherheitsschalter **(2)** entlang der Betätigungsrichtung **(X)** zum Interagieren mit dem Sicherheitsschalter **(2)** geeignet sind;
- eine Verankerungshalterung **(6)** zum Montieren des Sicherheitsschalters **(2)** an dem feststehenden Teil des Zugangs und versehen mit Befestigungsmitteln **(11, 12)** für den Sicherheitsschalter **(2),**
wobei die Verankerungshalterung **(6)** mit einer Frontfläche **(14)** versehen ist, die auf einer frontalen Ebene **(F)** parallel zu der Betätigungsrichtung **(X)** liegt und auf der die Befestigungsmittel **(11, 12)** ausgebildet sind,
wobei der Schlitten **(7)** in Bezug auf eine erste Symmetrieebene **(S1),** enthaltend die Betätigungsrichtung **(X)** und orthogonal zu der frontalen Ebene **(F),** symmetrisch ist, und **dadurch gekennzeichnet, dass**
sich die Aktormittel **(5)** auf einer Liegeebene entwickeln, die mit der ersten Symmetrieebene **(S1)** übereinstimmt, und einen Aktor umfassen, der in Bezug auf die erste Symmetrieebene **(S1)** eine symmetrische Struktur aufweist.

2. Griffsicherheitsanordnung nach Anspruch **1, dadurch gekennzeichnet, dass** die Aktorvorrichtung **(4)** in Bezug auf die erste Symmetrieebene **(S1)** symmetrisch ist.

3. Griffsicherheitsanordnung nach Anspruch **1** oder **2, dadurch gekennzeichnet, dass** die Aktormittel **(5)** auf eine nicht lösbare Weise an dem Schlitten **(7)** befestigt sind.

4. Griffsicherheitsanordnung nach einem der Ansprüche **1** bis **3, dadurch gekennzeichnet, dass** die Befestigungsmittel **(11, 12)** eine Vielzahl von ersten Befestigungselementen **(11)** umfassen, die an der Frontfläche **(14)** der Verankerungshalterung **(6)** mit einer symmetrischen Konfiguration in Bezug auf eine zweite Symmetrieebene **(S2)** bei Gebrauch orthogonal zu der Betätigungsrichtung **(X)** der Aktorvorrichtung **(4)** zum Befestigen der Verankerungshalterung **(6)** an dem feststehenden Teil des Zugangs angeordnet sind.

5. Griffsicherheitsanordnung nach einem der vorhergehenden Ansprüche, **dadurch gekennzeichnet, dass** die Befestigungsmittel **(11, 12)** eine Vielzahl von Verankerungselementen **(12)** umfassen, die an der Frontfläche **(14)** der Verankerungshalterung **(6)** mit einer symmetrischen Konfiguration in Bezug auf eine zweite Symmetrieebene **(S2)** bei Gebrauch orthogonal zu der Betätigungsrichtung **(X)** der Aktorvorrichtung **(4)** zum Befestigen des Sicherheitsschalters **(2)** an der Verankerungshalterung **(6)** angeordnet sind.

6. Griffsicherheitsanordnung nach einem der vorhergehenden Ansprüche, **dadurch gekennzeichnet, dass** die Aktormittel **(5)** eine symmetrische Konfiguration in Bezug auf die erste Symmetrieebene **(S1)** aufweisen.

7. Griffsicherheitsanordnung nach einem der vorhergehenden Ansprüche, **dadurch gekennzeichnet, dass** die Aktorvorrichtung **(4)** eine symmetrische Konfiguration in Bezug auf die erste Symmetrieebene **(S1)** aufweist.

8. Griffsicherheitsanordnung nach Anspruch **6** oder **7, dadurch gekennzeichnet, dass** die Aktormittel **(5)** einen Aktor umfassen, der sich von dem Schlitten **(7)** in einer Liegeebene parallel zu oder übereinstimmend mit der ersten Symmetrieebene **(S1)** erstreckt und in Bezug auf die erste Symmetrieebene **(S1)** symmetrisch ist.

9. Griffsicherheitsanordnung nach einem der vorhergehenden Ansprüche, **dadurch gekennzeichnet, dass** sie eine Führung **(8)** umfasst, die geeignet ist, um an dem bewegbaren Teil des Zugangs verankert zu sein, und die die Betätigungsrichtung **(X)** definiert, wobei der Schlitten **(7)** derart montiert ist, dass er auf der Führung **(8)** entlang der Betätigungsrichtung **(X)** verschoben wird.

10. Griffsicherheitsanordnung nach Anspruch **9, dadurch gekennzeichnet, dass** die Führung **(8)** eine symmetrische Konfiguration in Bezug auf die erste Symmetrieebene **(S1)** aufweist.

11. Griffsicherheitsanordnung nach Anspruch **10, dadurch gekennzeichnet, dass** der Schlitten **(7)** eine starre Hülle **(18),** aufweisend einen Griffabschnitt **(19),** der wie ein durch einen Nutzer zu greifender Griff ausgeformt ist und das Verschieben des Schlittens **(7)** entlang der Führung **(8)** fördert, und einen Betätigungsabschnitt **(20),** der einstückig mit dem Griffabschnitt **(19)** ausgeführt und mit den Aktormitteln **(5)** versehen ist, umfasst.

12. Griffsicherheitsanordnung nach Anspruch **10** oder **11, dadurch gekennzeichnet, dass** der Schlitten **(7)** entlang der Führung **(8)** zwischen einer ersten Endposition, in der die Aktormittel **(5)** nicht mit dem Sicherheitsschalter **(2)** interagieren, und einer zweiten Endposition, in der die Aktormittel **(5)** mit dem Sicherheitsschalter **(2)** interagieren, verschoben wird und in seinem Inneren einen Schieber **(28)** oder ein Verriegelungselement aufnimmt, der/das zum Eintreten in einen in der Führung **(8)** ausgebildeten Endhubsitz **(27),** wenn sich der Schlitten **(7)** in der ersten Endposition befindet, geeignet ist.

13. Griffsicherheitsanordnung nach Anspruch **12, dadurch gekennzeichnet, dass** der Schieber **(28)** oder das Verriegelungselement mit einem Entriegelungselement **(29)** assoziiert ist, das zum Ermöglichen des Herausziehens des Schiebers **(28)** aus dem Endhubsitz **(27)** geeignet ist, um den Schieber **(7)** zu entriegeln und diesem zu ermöglichen, in Richtung der zweiten Endposition verschoben zu werden.

14. Griffsicherheitsanordnung nach Anspruch **13, dadurch gekennzeichnet, dass** der Schlitten **(7)** einen Aufnahmesitz **(30)** für das Entriegelungselement **(29)** umfasst, wobei der Aufnahmesitz **(30)** ausgeformt ist, um das Entriegelungselement **(29)** vollständig zu enthalten, wenn sich der Schlitten **(7)** in der ersten Endposition befindet.

15. Griffsicherheitsanordnung nach einem der vorhergehenden Ansprüche, **dadurch gekennzeichnet, dass** der Schlitten **(7)** mit einer Zentrierhalterung **(21)** versehen ist, die hinter den Aktormitteln **(5)** angeordnet ist und ein Zentrierende **(22)** aufweist, und dadurch, dass die Verankerungshalterung **(6)** eine Seitenfläche **(24)** umfasst, auf der ein Sitz **(23)** zum Einfügen des Zentrierendes **(22)** ausgebildet ist, wobei die Verankerungshalterung **(6)** von einer im Wesentlichen konstanten Dicke und frei von hervorspringenden Elementen ist.

## Revendications

1. Ensemble de sécurité pour poignée destiné à protéger un accès à des machines ou installations industrielles, dans lequel un accès comporte au moins une partie fixe adaptée pour délimiter une zone de travail de la machine ou de l'installation industrielle et au moins une partie mobile servant de protection contre l'entrée dans ladite zone de travail, lequel ensemble comprend :
- un interrupteur de sécurité **(2)** muni de moyens de commutation adaptés pour être connectés à des circuits d'alimentation et/ou de service de la machine ou de l'installation industrielle ;
- un dispositif d'actionnement **(4)** comprenant un coulisseau **(7)** adapté pour être monté sur l'accès de manière coulissante suivant une direction d'actionnement **(X)** et comportant des moyens d'actionnement **(5)** adaptés pour interagir avec ledit interrupteur de sécurité **(2)** lors du mouvement d'approche/d'éloignement dudit coulisseau **(7)** par rapport audit interrupteur de sécurité **(2)** suivant ladite direction d'actionnement **(X)** ;
- un support d'ancrage **(6)** destiné à fixer ledit interrupteur de sécurité **(2)** à la partie fixe de l'accès et muni de moyens de fixation **(11, 12)** pour ledit interrupteur de sécurité **(2)** ;
dans lequel ledit support d'ancrage **(6)** est muni d'une face avant **(14)** située dans un plan frontal **(F)** parallèle à ladite direction d'actionnement **(X)** et sur laquelle sont réalisés lesdits moyens de fixation **(11, 12),**
dans lequel ledit coulisseau **(7)** est symétrique par rapport à un premier plan de symétrie **(S1)** contenant ladite direction d'actionnement **(X)** et orthogonal audit plan frontal **(F),** et **caractérisé**
**en ce que** lesdits moyens d'actionnement **(5)** se développent sur un plan horizontal coïncidant avec ledit premier plan de symétrie **(S1)** et comprennent un actionneur présentant une structure symétrique par rapport audit premier plan de symétrie **(S1).**

2. Ensemble de sécurité pour poignée selon la revendication **1, caractérisé en ce que** ledit dispositif d'actionnement **(4)** est symétrique par rapport audit premier plan de symétrie **(S1).**

3. Ensemble de sécurité pour poignée selon la revendication **1** ou **2, caractérisé en ce que** lesdits moyens d'actionnement **(5)** sont fixés de manière inamovible audit coulisseau **(7).**

4. Ensemble de sécurité pour poignée selon l'une quelconque des revendications **1** à **3,** **caractérisé en ce que** lesdits moyens de fixation **(11, 12)** comprennent une pluralité de premiers éléments de fixation **(11)** disposés sur ladite face avant **(14)** de ledit support d'ancrage **(6)** avec une configuration symétrique par rapport à un deuxième plan de symétrie **(S2)** orthogonal, en cours d'utilisation, à ladite direction d'actionnement **(X)** dudit dispositif d'actionnement **(4)** pour fixer ledit support d'ancrage **(6)** à la partie fixe de l'accès.

5. Ensemble de sécurité pour poignée selon une quelconque revendication précédente, **caractérisé en ce que** lesdits moyens de fixation **(11, 12)** comprennent une pluralité d'éléments d'ancrage **(12)** disposés sur ladite face avant **(14)** dudit support d'ancrage **(6)** selon une configuration symétrique par rapport à un deuxième plan de symétrie **(S2)** orthogonal, en cours d'utilisation, à ladite direction d'actionnement **(X)** dudit dispositif d'actionnement **(4)** pour fixer ledit interrupteur de sécurité **(2)** audit support d'ancrage **(6).**

6. Ensemble de sécurité pour poignée selon une quelconque revendication précédente, **caractérisé en ce que** lesdits moyens d'actionnement **(5)** présentent une configuration symétrique par rapport audit premier plan de symétrie **(S1).**

7. Ensemble de sécurité pour poignée selon une quelconque revendication précédente, **caractérisé en ce que** ledit dispositif d'actionnement **(4)** présente une configuration symétrique par rapport audit premier plan de symétrie (S1).

8. Ensemble de sécurité pour poignée selon la revendication **6** ou **7, caractérisé en ce que** lesdits moyens d'actionnement **(5)** comprennent un actionneur qui s'étend à partir dudit coulisseau **(7)** dans un plan de positionnement parallèle audit premier plan de symétrie **(S1)** ou coïncidant avec celui-ci, et qui est symétrique par rapport audit premier plan de symétrie (**S1**).

9. Ensemble de sécurité pour poignée selon une quelconque revendication précédente, **caractérisé en ce qu'**il comprend un guide **(8)** adapté pour être ancré à la partie mobile de l'accès et définissant ladite direction d'actionnement **(X),** ledit coulisseau **(7)** étant monté de manière à coulisser sur ledit guide **(8)** suivant ladite direction d'actionnement **(X).**

10. Ensemble de sécurité pour poignée selon la revendication **9, caractérisé en ce que** ledit guide **(8)** présente une configuration symétrique par rapport audit premier plan de symétrie **(S1).**

11. Ensemble de sécurité pour poignée selon la revendication **10, caractérisé en ce que** ledit coulisseau **(7)** comprend une coque rigide **(18)** comportant une partie de poignée **(19)** en forme de poignée destinée à être saisie par un utilisateur et à faciliter le glissement dudit coulisseau **(7)** le long dudit guide **(8),** et une partie d'actionnement **(20)** solidaire de ladite partie de poignée **(19)** et pourvue dudit moyen d'actionnement **(5).**

12. Ensemble de sécurité pour poignée selon la revendication **10** ou **11, caractérisé en ce que** ledit coulisseau **(7)** coulisse le long dudit guide **(8)** entre une première position d'extrémité dans laquelle lesdits moyens d'actionnement **(5)** n'interagissent pas avec ledit interrupteur de sécurité **(2)** et une deuxième position d'extrémité dans laquelle lesdits moyens d'actionnement **(5)** interagissent avec ledit interrupteur de sécurité **(2)** et loge à l'intérieur un coulisseau **(28)** ou un élément de verrouillage adapté pour s'engager, lorsque ladite glissière **(7)** se trouve dans ladite première position d'extrémité, dans un logement de fin de course **(27)** formé dans ledit guide **(8).**

13. Ensemble de sécurité pour poignée selon la revendication **12, caractérisé en ce que** ledit coulisseau **(28)** ou élément de verrouillage est associé à un élément de déverrouillage **(29)** adapté pour permettre l'extraction dudit coulisseau **(28)** dudit logement de fin de course **(27)** afin de déverrouiller ledit coulisseau **(7)** et de lui permettre de coulisser vers ladite deuxième position d'extrémité.

14. Ensemble de sécurité pour poignée selon la revendication **13, caractérisé en ce que** ledit coulisseau **(7)** comprend un logement **(30)** pour ledit élément de déverrouillage **(29),** ledit logement (30) étant conformé de manière à contenir entièrement ledit élément de déverrouillage **(29)** lorsque ledit coulisseau **(7)** se trouve dans ladite première position d'extrémité.

15. Ensemble de sécurité pour poignée selon une quelconque revendication précédente, **caractérisé en ce que** ledit coulisseau **(7)** est pourvu d'une patte de centrage **(21)** disposée derrière ledit moyen d'actionnement **(5)** et comportant une extrémité de centrage **(22),** et **en ce que** ledit support d'ancrage (6) comporte une face latérale **(24)** sur laquelle est ménagé un logement **(23)** pour l'insertion de ladite extrémité de centrage **(22),** ledit support d'ancrage **(6)** présentant une épaisseur sensiblement constante et étant dépourvue d'éléments en saillie.
